# FASCICULE DE BREVET EUROPEEN

(11) **EP 3 009 879 B1**
(45) Date de publication et mention de la délivrance du brevet: **11.03.2020**
(21) Numéro de dépôt: 15306643.6
(22) Date de dépôt: 15.10.2015
(51) Int. Cl.: G02F 1/035, G02F 1/225

(54) **MODULATEUR DE PHASE ÉLECTRO-OPTIQUE ET PROCÉDÉ DE MODULATION**
ELEKTROOPTISCHER PHASENMODULATOR, UND MODULATIONSVERFAHREN
ELECTRO-OPTICAL -PHASE MODULATOR AND MODULATION METHOD

(30) Priorité: 15.10.2014 FR 1459892
(43) Date de publication de la demande: 20.04.2016
(73) Titulaire: IXBLUE, 78100 Saint-Germain-en-Laye (FR)
(72) Inventeur: PORTE, Henri, 25770 SERRES les SAPINS (FR); GROSSARD, Nicolas, 25170 AUDEUX (FR)
(74) Mandataire: Jacobacci Coralis Harle

(56) Documents cités:
- JP-A- H01 134 402
- JP-A- H05 173 101
- US-A- 4 145 109
- US-A- 4 359 261
- US-A- 4 984 861
- US-A1- 2006 110 089
- US-B1- 6 334 004

## Description

La présente invention concerne de manière générale le domaine des modulateurs optiques pour le contrôle des signaux lumineux.

Elle concerne plus particulièrement un modulateur de phase électro-optique destiné à moduler la phase optique d'une onde lumineuse incidente sur le modulateur.

L'invention concerne également un procédé de modulation pour un tel modulateur de phase électro-optique.

Un modulateur de phase électro-optique est un dispositif opto-électronique qui permet de contrôler la phase optique d'une onde lumineuse qui est incidente sur le modulateur et qui le traverse, en fonction d'un signal électrique qui lui est appliqué.

Il est connu de l'art antérieur une catégorie particulière de modulateurs de phase électro-optiques, dits modulateurs intégrés ou modulateurs en optique guidée, qui comportent :
- un substrat électro-optique comprenant une face d'entrée et une face de sortie,
- un guide d'onde optique continûment rectiligne depuis une extrémité d'entrée de guide située sur ladite face d'entrée du substrat jusqu'à une extrémité de sortie de guide située sur ladite face de sortie du substrat, ledit guide d'onde optique ayant un indice de réfraction optique supérieur à l'indice de réfraction optique du substrat et étant adapté pour guider ladite onde lumineuse incidente partiellement couplée dans ledit guide d'onde optique en une onde lumineuse guidée se propageant suivant le chemin optique dudit guide d'onde optique entre ladite extrémité d'entrée et ladite extrémité de sortie de guide, et
- au moins deux électrodes de modulation disposées parallèlement audit guide d'onde, pour, lorsqu'une tension de modulation est appliquée entre lesdites électrodes de modulation, introduire un déphasage de modulation, fonction de ladite tension de modulation, sur ladite onde lumineuse guidée se propageant dans ledit guide d'onde optique.

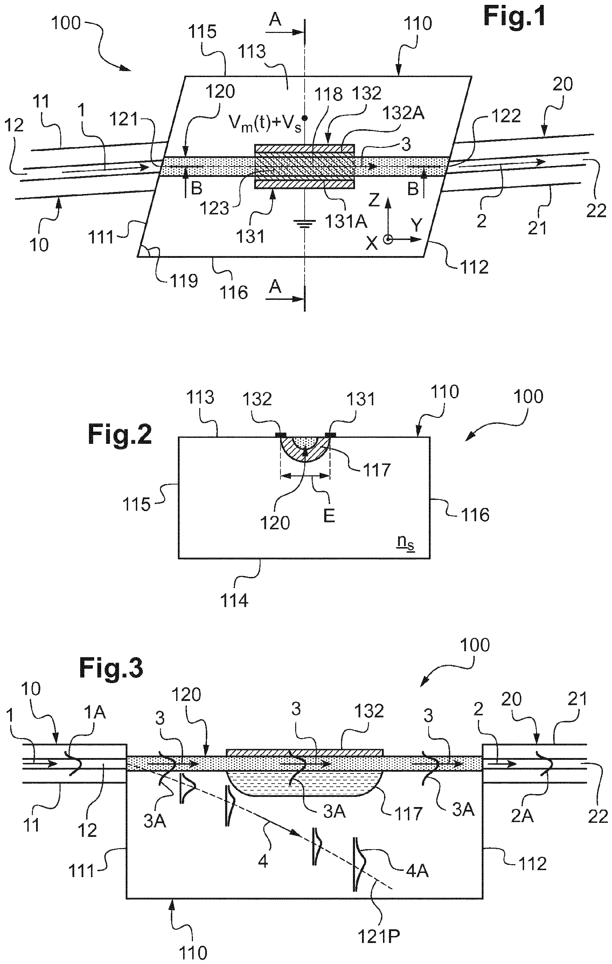

Pour réduire le couplage entre l'onde lumineuse guidée dans le guide d'onde optique et une onde lumineuse qui se propagerait de manière non guidée optiquement dans le substrat électro-optique, le document JP H01-134402A propose d'utiliser de faire diffuser de l'oxyde de magnésium (MgO), en déposant deux « fils » de MgO sur la face supérieure du substrat, le long du guide d'onde optique (voir la figure 1A) puis en chauffant. On obtient alors deux zones (voir la figure 1B) entourant le guide d'onde optique qui sont aptes à diminuer l'indice de réfraction optique dudit substrat électro-optique au voisinage du guide d'onde (la distribution de la variation d'indice dans la direction transverse est représentée sur la figure 2C).

Le document US 2006/0110089A1 décrit un modulateur d'intensité de type Mach-Zehnder en optique intégrée et propose également de diminuer l'indice au voisinage du guide d'onde optique en diminuant l'indice de réfraction du substrat d'une couche supérieure par diffusion thermique d'un matériau à bas indice (par exemple MgO).

Dans la présente demande, on entendra par substrat électro-optique, un substrat formé d'un seul bloc, c'est-à-dire que le substrat électro-optique ne constitue pas la couche électro-optique d'une structure optique plus globale tel qu'un empilement comportant le substrat électro-optique, une ou plusieurs couches intermédiaires, et un support pour la tenue mécanique de la structure.

On entendra par ailleurs par guide d'onde optique continûment rectiligne, un guide d'onde optique formé par un unique segment rectiligne de guide reliant, en un seul morceau, l'extrémité d'entrée de guide à l'extrémité de sortie de guide. En particulier, le guide d'onde optique ne comporte aucune portion courbe et n'est pas non plus un guide d'onde rectiligne par morceaux, c'est-à-dire formé de plusieurs segments rectilignes.

La polarisation des électrodes de modulation avec la tension de modulation permet, par effet électro-optique dans le substrat, de faire varier l'indice de réfraction optique du guide d'onde dans lequel se propage l'onde lumineuse guidée, en fonction de cette tension de modulation.

Cette variation d'indice de réfraction optique du guide d'onde introduit alors un déphasage de modulation, avance ou retard de phase, en fonction du signe de la tension de modulation, sur la phase optique de l'onde lumineuse guidée traversant le guide d'onde.

Ceci se traduit en sortie du modulateur par une modulation de la phase optique de l'onde lumineuse incidente.

En théorie, un tel modulateur de phase électro-optique ne module que la phase optique de l'onde lumineuse incidente. Aussi, si l'on place un photo-détecteur sur la trajectoire de l'onde lumineuse émergente en sortie de ce modulateur, alors la puissance optique (en Watt) mesurée par ce photo-détecteur sera constante et indépendante du déphasage de modulation introduit sur l'onde lumineuse guidée grâce aux électrodes de modulation.

En pratique, cependant, la puissance optique mesurée n'est pas constante et on détecte une faible variation de la puissance optique à la sortie du modulateur de phase.

Cette modulation d'amplitude résiduelle ou « RAM » (pour *« Residual Amplitude Modulation »* en anglais) s'avère dans certains cas non négligeable de sorte que les performances du modulateur de phase sont dégradées.

Afin de remédier à l'inconvénient précité de l'état de la technique, la présente invention propose un modulateur de phase électro-optique permettant de réduire la modulation d'amplitude résiduelle en sortie de ce modulateur.

À cet effet, l'invention concerne un modulateur de phase électro-optique tel que défini dans la revendication 1.

Le dispositif selon l'invention permet ainsi de réduire le couplage entre l'onde lumineuse guidée dans le guide d'onde optique et une onde lumineuse qui se propage de manière non guidée optiquement dans le substrat électro-optique.

En effet, à l'extrémité d'entrée de guide, lors de l'injection de l'onde lumineuse incidente dans le guide d'onde optique, une partie de cette onde lumineuse incidente n'est pas couplée au guide d'onde mais est diffractée au niveau de la face d'entrée, de sorte qu'une onde lumineuse rayonne et se propage alors dans le substrat de manière non guidée hors du guide d'onde, la direction principale de propagation de cette onde lumineuse diffractée étant définie par le segment rectiligne joignant l'extrémité d'entrée de guide et l'extrémité de sortie de guide.

En d'autres termes, cette onde lumineuse diffractée se propage parallèlement au guide d'onde optique rectiligne et en particulier elle passe sous les électrodes de modulation.

Cette onde lumineuse non guidée présente une extension spatiale transverse, dans un plan perpendiculaire au guide d'onde, qui par diffraction s'accroît jusqu'à la face de sortie du substrat.

En d'autres termes, le faisceau lumineux associé à l'onde lumineuse non guidée présente une divergence angulaire qui s'accroît au cours de la propagation du faisceau lumineux dans le substrat, hors du guide d'onde.

Sans précautions particulières, il apparaît qu'une partie de l'onde lumineuse non guidée peut se coupler à l'onde lumineuse guidée au niveau de l'extrémité de sortie de guide de sorte que ces deux ondes lumineuses interfèrent entre elles, donnant ainsi naissance à la modulation d'amplitude résiduelle mentionnée.

Ainsi, en générant un champ électrique permanent dans le substrat électro-optique grâce aux moyens de polarisation électrique, il se forme à proximité de ceux-ci une région où l'indice de réfraction optique est plus faible que l'indice de réfraction optique du substrat au repos.

On entendra ici que le champ électrique généré par les moyens de polarisation électrique est permanent en ce sens qu'il disparaît dès que les moyens de polarisation électrique ne sont plus alimentés.

Dans la région soumise au champ électrique, au voisinage du guide d'onde, aucune onde lumineuse ne peut plus se propager de sorte que l'onde lumineuse non guidée dans le substrat est déviée et éloignée du guide d'onde.

La diminution de l'indice de réfraction optique du substrat électro-optique affecte simultanément le substrat et le guide d'onde de sorte que le guidage de l'onde lumineuse guidée dans le guide d'onde est peu perturbé par le champ électrique permanent généré par les moyens de polarisation électrique.

Grâce à la déviation de l'onde lumineuse non guidée, celle-ci ne se recouvre plus avec l'onde lumineuse guidée au niveau de l'extrémité de sortie de guide de sorte que les interférences entre l'onde lumineuse guidée et l'onde lumineuse non guidée en sortie du modulateur sont considérablement réduites.

De cette façon, la modulation d'amplitude résiduelle est fortement atténuée.

De manière avantageuse, lesdits moyens de polarisation électrique comprennent lesdites au moins deux électrodes de modulation, qui, lorsqu'une tension additionnelle de polarisation est appliquée entre lesdites électrodes de modulation en plus de ladite tension de modulation, sont susceptibles de générer ledit champ électrique permanent.

Par ailleurs, d'autres caractéristiques avantageuses et non limitatives du modulateur de phase électro-optique selon l'invention sont décrites dans les revendications 3 à 8.

La présente invention concerne également un procédé de modulation tel que défini dans la revendication 9.

Selon l'invention, ledit procédé de modulation comprend une étape de polarisation desdits moyens de polarisation électrique adaptée à générer un champ électrique permanent apte à diminuer l'indice de réfraction optique dudit substrat électro-optique au voisinage dudit guide d'onde.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente une vue de dessus d'un premier mode de réalisation d'un modulateur de phase électro-optique selon l'invention comportant une paire d'électrodes de modulation et connecté en entrée et en sortie à une fibre optique ;
- la figure 2 est une vue en coupe transversale du modulateur de phase de la figure 1 selon le plan de coupe A-A ;
- la figure 3 est une vue en coupe longitudinale du modulateur de phase de la figure 1 selon le plan de coupe B-B ;
- la figure 4 représente une vue de dessus d'un deuxième mode de réalisation d'un modulateur de phase électro-optique selon l'invention dans lequel le modulateur de phase comporte trois électrodes de modulation ;
- la figure 5 représente une vue de dessus d'un troisième mode de réalisation d'un modulateur de phase électro-optique selon l'invention comportant une paire d'électrodes de modulation et une paire d'électrodes supplémentaires disposées avant les électrodes de modulation ;
- la figure 6 représente une vue de dessus d'un quatrième mode de réalisation d'un modulateur de phase électro-optique selon l'invention comportant une paire d'électrodes de modulation et deux paires d'électrodes supplémentaires disposées avant et après les électrodes de modulation ;
- la figure 7 est une vue de dessus d'une variante du troisième mode de réalisation du modulateur de phase selon l'invention de la figure 5 dans laquelle les électrodes supplémentaires sont placées le long d'une portion courbe du guide d'onde ;
- la figure 8 est une vue de dessus d'une variante du quatrième mode de réalisation du modulateur de phase selon l'invention de fa figure 6 dans laquelle les deux paires d'électrodes supplémentaires sont placées sur deux portions courbes du guide d'onde.

On a représenté sur les figures 1 à 8 différents modes de réalisation d'un modulateur 100 de phase électro-optique, ainsi que certaines de leurs variantes.

De manière générale, ce modulateur 100 est destiné à moduler la phase optique d'une onde lumineuse incidente 1 (représenté ici par une flèche, cf. figure 1 par exemple) sur le modulateur 100.

Un tel modulateur 100 trouve de nombreuses applications en optique, notamment en télécommunications par fibre optique pour la transmission de données, dans les capteurs interférométriques pour le traitement de l'information, ou encore dans l'asservissement dynamique de cavités laser.

Le modulateur 100 comprend tout d'abord un substrat 110 électro-optique présentant de la biréfringence du premier ordre induite par un champ électrique statique ou variable, encore appelée effet *Pockels.*

Ce substrat 110 électro-optique est de préférence formé d'un cristal de niobate de lithium, de formule chimique LiNbO₃, ce matériau présentant un effet *Pockels* important.

Le substrat 110 présente par ailleurs un indice nₛ de réfraction optique compris entre 2,13 et 2,25 pour une gamme de longueurs d'onde comprise entre 400 nanomètres (nm) et 1600 nm.

En variante, le substrat électro-optique du modulateur de phase peut être un cristal de tantalate de lithium (LiTaO₃).

En variante encore, ce substrat électro-optique peut être en matériau polymère ou en matériau semi-conducteur, par exemple en silicium (Si), en phosphure d'indium (InP) ou en arséniure de gallium (GaAs).

Le substrat 110 comprend, d'une part, une face d'entrée 111 et, d'autre part, une face de sortie 112. Il présente ici une géométrie planaire avec deux faces latérales 115, 116, une face inférieure 114 et une face supérieure 113 (voir figures 1 et 2 par exemple).

La face inférieure 114 et la face supérieure 113 s'étendent ainsi entre la face d'entrée 111 et la face de sortie 112 du substrat 110 en étant parallèle l'une à l'autre.

De la même manière, comme le montrent les figures 1 et 2, la face d'entrée 111 et la face de sortie 112 sont également ici parallèles l'une à l'autre, comme le sont les faces latérales 115, 116.

Le substrat 110 a ainsi la forme d'un parallélépipède. De préférence, ce parallélépipède est non droit et le substrat 110 est tel que la face d'entrée 111 et l'une des faces latérales (ici la face latérale 116, voir figure 1) présente un angle 119 inférieur à 90°, compris entre 80° et 89,9°, par exemple égal à 85°.

On comprendra dans la suite de la description l'avantage d'un tel angle 119 pour améliorer les performances du modulateur 100 de phase.

Comme le montrent les figures 2 et 3, le substrat 110 est mono-bloc et formé d'un seul bloc de cristal de niobate de lithium.

Le substrat 110 présente de préférence une épaisseur, entre la face inférieure 114 et la face supérieure 113, strictement supérieure à 20 microns. Encore plus préférentiellement, l'épaisseur du substrat 110 est comprise entre 30 microns et 1 millimètre.

Par ailleurs, le substrat 110 présente de préférence une longueur entre la face d'entrée 111 et la face de sortie 112, qui est comprise entre 10 et 100 millimètres.

De préférence encore, le substrat 110 présente une largeur, mesurée entre les deux faces latérales 115, 116, qui est comprise entre 0,5 millimètres et 100 millimètres.

Le substrat 110 du modulateur étant ici un cristal de niobate de lithium, celui-ci est biréfringent (biréfringence intrinsèque par opposition à la biréfringence induite par un champ électrique) et il importe de préciser la géométrie et l'orientation de ce substrat 110 par rapport aux axes de ce cristal.

Dans les premier, troisième et quatrième mode de réalisation de l'invention représentés respectivement sur les figures 1 à 3, 5 et 7, et 6 et 8, le substrat 110 est ainsi coupé selon l'axe X du cristal de LiNbO₃ de sorte que la face supérieure 113 du substrat 110 soit parallèle au plan Y-Z du cristal (voir figure 1). Et plus précisément encore, l'axe Y du cristal est ici orienté parallèlement aux faces latérales 115, 116 du substrat 110 électro-optique.

Par convention, pour le niobate de lithium, l'axe Z est parallèle à l'axe C ou a3 de la maille du cristal. L'axe Z est perpendiculaire à l'axe X du cristal qui est lui-même parallèle à l'axe a1 de la maille. L'axe Y est perpendiculaire à la fois à l'axe Z et à l'axe X. L'axe Y est tourné de 30° par rapport à l'axe a2 de la maille, lui-même orienté à 120° de l'axe a1 et à 90° de l'axe a3. Les coupes et orientations des faces du cristal se réfèrent généralement aux axes X, Y et Z.

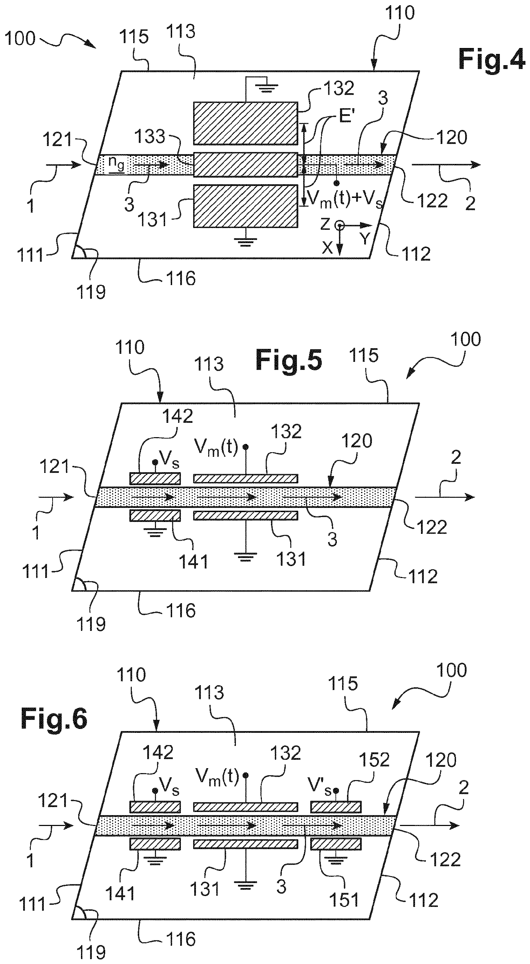

Dans le deuxième mode de réalisation de l'invention représenté sur la figure 4, le substrat 110 est quant à lui coupé selon l'axe Z du cristal de LiNbO3 de sorte que la face supérieure 113 du substrat 110 soit parallèle au plan X-Y du cristal. Dans ce cas encore, l'axe Y du cristal est orienté parallèlement aux faces latérales 115, 116 du substrat 110 électro-optique.

Dans tous les modes de réalisation, le modulateur 100 de phase est du type intégré et comprend un unique guide d'onde 120 optique qui s'étend rectilignement (voir figure 1 et figures 3 à 8) de manière continue :
- depuis une extrémité d'entrée 121 de guide située sur la face d'entrée 111 du substrat 110,
- jusqu'à une extrémité de sortie 122 de guide située sur la face de sortie 112 du substrat 110.

Dans la configuration planaire décrite, le guide d'onde 120 s'étend dans un plan parallèle qui est proche de la surface supérieure 113 du substrat 110.

En particulier ici, comme représenté par exemple sur les figures 2 et 3 pour le premier mode de réalisation, le guide d'onde 120 est affleurant à la face supérieure 113 du substrat 110 et présente une section semi-circulaire (voir figure 2) de rayon 3 à 4 micromètres.

De préférence, le guide d'onde 120 présente une longueur qui est comprise entre 10 millimètres et 100 millimètres.

Ce guide d'onde 120 peut être réalisé dans le substrat 110 de niobate de lithium par un procédé thermique de diffusion du titane du cristal ou par un procédé d'échange protonique recuit bien connus de l'homme du métier.

De cette façon, on obtient un guide d'onde 120 optique qui présente un indice n_{g} de réfraction optique qui est supérieur à l'indice nₛ de réfraction optique du substrat. Si le procédé de fabrication du guide d'onde optique est la diffusion du titane, les deux indices de réfraction, ordinaire et extraordinaire voient leur valeur augmenter. Le guide réalisé par diffusion de titane peut ainsi supporter, i.e. guider, les deux états de polarisation. Si le procédé de fabrication du guide d'onde optique est l'échange protonique, dans ce cas seul l'indice de réfraction extraordinaire voit sa valeur augmenter, tandis que l'indice de réfraction ordinaire voit sa valeur diminuer. Le guide d'onde réalisé par échange protonique ne peut ainsi supporter qu'un seul état de polarisation.

Afin d'assurer le guidage de la lumière, cet indice n_{g} de réfraction optique du guide d'onde 120 doit être supérieur à l'indice nₛ de réfraction optique du substrat 110.

De manière générale, plus la différence n_{g} - nₛ d'indice de réfraction optique entre le guide d'onde 120 et ledit substrat 110 électro-optique est élevée, plus élevé est le confinement de la lumière.

De manière avantageuse ici, la différence n_{g} - nₛ d'indice de réfraction optique entre le guide d'onde 120 et ledit substrat 110 électro-optique est comprise dans une gamme allant de 10⁻² à 10⁻³.

Aux fins de moduler l'onde lumineuse incidente 1, le modulateur 100 de phase optique comporte également des moyens de modulation.

Dans les premier, troisième et quatrième mode de réalisation de l'invention représentés respectivement sur les figures 1 à 3, 5 et 7, et 6 et 8, où le substrat 110 est coupé selon l'axe X, ces moyens de modulation comportent deux électrodes de modulation 131, 132 disposées parallèlement au guide d'onde 120 optique, ici de part et d'autre de celui-ci.

Dans les différents modes de réalisation, ces électrodes de modulation 131, 132 sont plus précisément disposées autour d'une portion rectiligne 123 du guide d'onde 120.

Par ailleurs, comme représenté sur la figure 1, les deux électrodes de modulation 131, 132 comprennent chacune un bord interne 131A, 132A orientés vers le guide d'onde 120. Elles définissent ainsi entre elles un espace inter-électrodes 118 qui s'étend du bord interne 131A de la première électrode de modulation 131 au bord interne 132A de la deuxième électrode de modulation 132.

Les deux électrodes de modulation 131, 132 sont espacées d'une distance E (voir figure 2) supérieure à la largeur du guide d'onde 120 au niveau de la face supérieure 113 du substrat 110 de sorte que les électrodes de modulation 131, 132 ne recouvrent pas le guide d'onde 120. La distance E inter-électrodes, délimitée par les deux bords internes 131A, 132A des électrodes de modulation 131, 132, correspond donc à la dimension transverse, ou largeur, de l'espace inter-électrodes 118.

Par exemple, le guide d'onde 120 a ici une largeur de 3 microns et la distance inter-électrodes E est égale à 10 microns.

Dans le deuxième mode de réalisation de l'invention représenté sur la figure 4, où le substrat 110 est coupé selon l'axe Z, les moyens de modulation comportent trois électrodes de modulation 131, 132, 133 disposées parallèlement audit guide d'onde 120.

La première électrode, ou électrode centrale 133, qui présente une largeur supérieure à celle du guide d'onde 120, est située au-dessus de celui-ci.

Les deuxième et troisième électrodes, ou contre-électrodes 131, 132 latérales, sont quant à elles situées de part et d'autre du guide d'onde 120, chacune espacée d'une distance E' par rapport à l'électrode centrale 133, cette distance E' étant déterminée entre le centre des contre-électrodes latérales 131, 132 et le centre de l'électrode centrale 133.

Par exemple, le guide d'onde 120 ayant ici une largeur de 3 microns et la distance E' entre l'électrode centrale 133 et les contre-électrodes 131, 132 est égale à 10 microns.

De manière classique, les électrodes de modulation 131, 132, 133 sont coplanaires et formées sur la face supérieure 113 du substrat 110 par des techniques connues de photo-lithographie.

Les dimensions (largeur, longueur, et épaisseur) des électrodes de modulation 131, 132, 133 sont déterminées en fonction des contraintes de modulation de phase du modulateur, de la nature et de la géométrie du substrat 110 (dimensions et orientation), de la largeur et de la longueur du guide d'onde 120, et des performances à atteindre.

Les électrodes de modulation 131, 132, 133 sont destinées à être polarisées par une tension de modulation, notée ici Vₘ(t), la tension de modulation étant une tension variable en fonction du temps t.

En d'autres termes, cette tension de modulation Vₘ(t) est appliquée entre les électrodes de modulation 131, 132, 133.

Pour cela, l'une des électrodes de modulation est portée à un potentiel électrique égal à la tension de modulation Vₘ(t) (l'électrode 132 dans le cas des premier, troisième et quatrième modes de réalisation, voir figures 1, 5, et 6 par exemple ; l'électrode 133 dans le cas du deuxième mode de réalisation, voir figure 4) alors que l'autre (l'électrode 131) ou les autres électrodes (les électrodes 131, 132) de modulation sont reliées à la masse.

Il est prévu des moyens de commande électrique (non représentés) permettant d'appliquer auxdites électrodes de modulation 131, 132, 133 la consigne souhaitée (amplitude, fréquence, ...) pour la tension de modulation Vₘ(t).

Afin de comprendre les avantages de l'invention, on va tout d'abord décrire brièvement le fonctionnement du modulateur 100 de phase électro-optique.

Le modulateur de phase 100 est conçu pour (voir figure 3) :
- recevoir en entrée l'onde lumineuse incidente 1 pour la coupler en une onde lumineuse guidée 3,
- moduler la phase optique de cette onde lumineuse guidée 3 se propageant rectilignement dans le guide d'onde 120, et
- coupler l'onde lumineuse guidée 3 en une onde lumineuse émergente 2 délivrée en sortie du modulateur 100, la phase optique de cette onde lumineuse émergente 2 présentant une modulation identique à celle de l'onde lumineuse guidée 3.

Afin de coupler en entrée, et respectivement en sortie, l'onde lumineuse incidente 1, et respectivement l'onde lumineuse émergente 2, le modulateur 100 comporte des moyens de couplage de l'onde lumineuse incidente 1 à l'extrémité d'entrée 121 de guide et des moyens de couplage de l'onde lumineuse émergente 2 à l'extrémité de sortie 122 de guide.

Ces moyens de couplage comprennent ici de préférence des sections 10, 20 de fibre optique (voir figure 3), par exemple une fibre optique de silice, comprenant chacune une gaine 11, 21 entourant un cœur 12, 22 de forme cylindrique dans lequel se propage respectivement l'onde lumineuse incidente 1 (dans le cœur 12) et l'onde lumineuse émergente 2 (dans le cœur 22) présentant ainsi chacune une symétrie de révolution.

On a représenté à titre d'exemple sur la figure 3, l'amplitude 1A de l'onde lumineuse incidente 1 se propageant dans le cœur 12 de la section 10 de fibre optique et l'amplitude 2A de l'onde lumineuse émergente 2A se propageant dans le cœur 22 de la section 20 de fibre optique. Ces amplitudes 1A, 2A correspondent à des modes de propagation dans les sections 10, 20 de fibre optique qui présentent une symétrie cylindrique.

Afin de réaliser le couplage, les sections 10, 20 de fibre optique sont respectivement amenées près de la face d'entrée 111 et de la face de sortie 112 de sorte que le cœur 12, 22 de chaque section 10, 20 de fibre optique soit aligné en regard de l'extrémité d'entrée 121 de guide et de l'extrémité de sortie 122 de guide.

De manière avantageuse, on peut prévoir d'utiliser une colle d'indice entre les sections 10, 20 de fibre optique et les faces d'entrée 111 et de sortie 112 du substrat 110 pour, d'une part, fixer lesdites sections 10, 20 de fibre optique au substrat 110, et, d'autre part, figer l'alignement optique et mécanique entre le cœur 12, 22 de la fibre 10, 20 par rapport aux extrémités d'entrée 121 et de sortie 122 du guide d'onde 120.

En entrée, l'onde lumineuse incidente 1 qui se propage le long du cœur 12 de la section 10 de fibre optique en direction du substrat 110 est partiellement couplée dans le guide d'onde 120 optique au niveau de l'extrémité d'entrée 121 de guide sous la forme de l'onde lumineuse guidée 3 (voir flèches sur la figure 3).

Cette onde lumineuse guidée 3 se propage alors suivant le chemin optique continûment rectiligne du guide d'onde 120 optique depuis l'extrémité d'entrée 121 jusqu'à l'extrémité de sortie 122 de guide et présente une amplitude 3A telle que représentée sur la figure 3.

À cause des réflexions partielles de l'onde lumineuse guidée 3 sur la face d'entrée 111 et la face de sortie 112, il peut se créer des interférences dans le guide d'onde 120 de sorte que l'amplitude 3A de l'onde lumineuse guidée 3 peut présenter une modulation d'amplitude résiduelle relativement élevée.

Néanmoins, grâce à l'angle 119 du substrat 110, ce phénomène d'interférences est fortement réduit de sorte que la modulation d'amplitude résiduelle due à ces réflexions parasites devient négligeable.

Lorsque les moyens de commande électrique appliquent la tension de modulation Vₘ(t) entre les électrodes de modulation 131, 132, 133, un champ électrique externe, proportionnel à cette tension de modulation Vₘ(t), est créé au voisinage des électrodes de modulation 131, 132, 133, plus précisément dans la région du substrat 110 et du guide d'onde 120 située sous les électrodes de modulation 131, 132, 133.

Par effet Pockels, l'indice de réfraction optique n_{g} du guide d'onde est modulé par ce champ électrique externe. De manière connue, la modulation de l'indice de réfraction optique est proportionnelle à l'amplitude du champ électrique externe, le coefficient de proportionnalité dépendant à la fois de la nature du matériau et de la géométrie des électrodes de modulation 131, 132, 133.

De plus, en fonction de l'orientation du champ électrique externe par rapport aux axes optiques du substrat 110, cette variation au voisinage des électrodes de modulation 131, 132, 133 peut être positive ou négative avec respectivement une augmentation et une diminution des indices de réfraction optique nₛ, n_{g} du substrat 110 et du guide d'onde 120.

Lors de la propagation de l'onde lumineuse guidée 3 dans le guide d'onde 120, cette variation de l'indice de réfraction optique n_{g} du guide d'onde 120 introduit sur la phase optique de l'onde lumineuse guidée 3 se propageant dans le guide d'onde 120 optique, un déphasage de modulation, qui est fonction de l'amplitude du champ électrique externe et donc de l'amplitude de la tension de modulation Vₘ(t) qui varie en fonction du temps t.

En fonction du signe de la tension de modulation Vₘ(t), et donc de l'orientation du champ électrique externe par rapport aux axes optiques du substrat 110, ce déphasage de modulation peut être positif ou négatif, associé respectivement à un retard ou à une avance de phase optique de l'onde lumineuse guidée 3.

De cette façon, grâce aux électrodes de modulation 131, 132, 133, la phase optique de l'onde lumineuse guidée 3 peut être modulée.

On revient maintenant au couplage de l'onde lumineuse incidente 1 dans le guide d'onde 120 optique.

Lors de ce couplage, à cause de la différence de distribution spatiale d'indice de réfraction entre la section 10 de fibre optique et le guide d'onde 120 dans le substrat 110, une partie de l'onde lumineuse incidente 1 est diffractée à l'extrémité d'entrée 121 de guide, de sorte qu'une onde lumineuse non guidée 4 dans le guide d'onde 120 (voir figure 3) se propage dans le substrat 110, de l'extrémité d'entrée 121 de guide jusque vers la face de sortie 112 du substrat 110, avec une direction principale de propagation 121P qui est coplanaire avec un plan perpendiculaire à la face supérieure 113 du substrat 110 et passant par le milieu du guide d'onde 120 rectiligne.

Cette onde lumineuse non guidée 4, dont l'amplitude 4A est représentée sur la figure 3, peut interférer à l'extrémité de sortie 122 de guide avec l'onde lumineuse guidée 3 dans le guide d'onde 120, créant ainsi une modulation d'amplitude résiduelle sur l'onde lumineuse émergente 2 à la sortie du modulateur 100.

Afin d'empêcher ces interférences et limiter la modulation d'amplitude résiduelle, le modulateur 100 selon l'invention comprend des moyens de polarisation électrique du substrat 110 électro-optique pour générer, dans celui-ci, un champ électrique permanent qui diminue l'indice nₛ de réfraction optique du substrat 110 au voisinage du guide d'onde 120.

De manière générale, ces moyens de polarisation électrique comprennent des électrodes et des moyens de commande électrique pour appliquer, entre ces électrodes, une tension électrique.

Dans le premier mode de réalisation représenté sur les figures 1 à 3, et dans sa variante représentée sur la figure 4, les moyens de polarisation électrique comprennent les électrodes de modulation 131, 132, 133 et les moyens de commande électrique associés (non représentés).

Lorsqu'une tension additionnelle de polarisation, notée ci-après Vₛ, est appliquée entre les électrodes de modulation 131, 132, 133 en plus de ladite tension de modulation Vₘ(t), de sorte que la tension totale appliquée soit égale à Vₘ(t)+Vs (cf. figures 1, 3, et 4), un champ électrique permanent est généré dans une région de polarisation 117 du substrat 110 (voir figure 3) située au voisinage du guide d'onde, à proximité et sous les électrodes de modulation 131, 132, 133.

Cette région de polarisation 117 correspond en pratique à une zone du substrat 110 et du guide dans laquelle les indices de réfraction nₛ, n_{g} du substrat 110 et du guide d'onde 120 sont modulés.

De préférence, cette tension additionnelle de polarisation Vₛ est constante dans le temps de sorte que le champ électrique permanent généré dans la région de polarisation 117 est également constant.

Afin de dévier l'onde lumineuse non guidée 4 du guide d'onde 120, la tension additionnelle de polarisation Vₛ est ajustée de sorte que le champ électrique permanent dans le substrat diminue, par effet Pockels, l'indice nₛ de réfraction optique du substrat 110 électro-optique au voisinage du guide d'onde 120, dans la région de polarisation 117.

L'onde lumineuse non guidée 4 suit alors la trajectoire 121P représentée en pointillée sur la figure 3, trajectoire qui s'écarte de la région de polarisation 117 d'indice plus faible que le reste du substrat 110.

De cette façon, l'onde lumineuse non guidée 4 ne se recouvre plus avec l'onde lumineuse guidée 3 au niveau de l'extrémité de sortie 122 de guide, si bien qu'elles ne peuvent plus interférer entre elles et entraîner une modulation d'amplitude résiduelle sur l'onde lumineuse émergente 2 en sortie du modulateur 100.

En pratique, avec des électrodes de modulation 131, 132 de longueur 40 millimètres, espacées de 10 micromètres, entre lesquelles une tension de polarisation de 5 à 10 volts est appliquée, on réduit la modulation d'amplitude résiduelle de plus de 10 décibels.

De manière avantageuse, le champ électrique permanent généré par les moyens de polarisation électrique est tel que la différence d'indice de réfraction optique induite dans le substrat 110 électro-optique est comprise dans une gamme allant de 10⁻⁵ à 10⁻⁶.

Grâce aux moyens de polarisation électrique, le modulateur 100 peut mettre en œuvre un procédé de modulation comprenant une étape de polarisation de ces moyens de polarisation électrique.

Lors de cette étape de polarisation, on génère le champ électrique permanent, ici par application de la tension additionnelle de polarisation Vₛ, de manière à diminuer l'indice nₛ de réfraction optique du substrat 110 électro-optique au voisinage du guide d'onde 120.

Cette étape de polarisation peut être avantageusement réalisée en même temps que l'étape de modulation consistant à appliquer la tension de modulation Vₘ(t) sur les électrodes de modulation 131, 132, 133.

En pratique, on applique sur lesdites électrodes de modulation 131, 132, 133 la tension totale Vₘ(t)+Vₛ de manière à simultanément moduler l'onde lumineuse guidée 3 dans le guide d'onde 120 et à dévier l'onde lumineuse non guidée 4 vers la face inférieure 114 du substrat 110.

De préférence, on ajuste l'amplitude de la tension additionnelle de polarisation Vₛ de telle sorte que le signe, positif ou négatif, de la tension totale Vₘ(t) + Vₛ appliquée sur les électrodes de modulation 131, 132 soit constant.

Par exemple, lorsque la tension de modulation Vm(t) est une modulation en créneaux carrés périodiques, prenant alternativement des valeurs positives et négatives, par exemple +1 V et -1 V, on peut choisir une tension additionnelle de polarisation Vₛ constante et égale à -5 V de sorte que la tension totale Vₘ(t) + Vₛ appliquée soit toujours négative.

La tension additionnelle de polarisation Vₛ étant constante, elle est associée à une avance ou un retard additionnel de phase optique de l'onde lumineuse guidée 3 dans le guide d'onde 120, avance ou retard qui est donc constant en fonction du temps. Aussi, l'application de cette tension additionnelle de polarisation Vₛ sur les électrodes de modulation 131, 132 ne perturbe pas la modulation de la phase optique de l'onde lumineuse guidée 3.

Dans un deuxième mode de réalisation du modulateur 100 de phase électro-optique représenté sur la figure 5, les moyens de polarisation électrique du modulateur 100 de phase électro-optique comprennent deux électrodes supplémentaires 141, 142 distinctes et séparées des électrodes de modulation 131, 132, 133.

Ces électrodes supplémentaires 141, 142 sont disposées parallèlement au guide d'onde 120, ici entre l'extrémité d'entrée 121 de guide et les électrodes de modulation 131, 132.

Les deux électrodes supplémentaires 141, 142 sont destinées à être polarisées par une tension de polarisation Vₛ appliquée entre elles grâce à des moyens supplémentaires de commande électrique pour générer un champ électrique permanent qui diminue l'indice n_{g} de réfraction optique du substrat 110 au voisinage du guide d'onde 120, ici dans une région du substrat située sous ces électrodes supplémentaires 141, 142.

En plaçant ces électrodes supplémentaires 141, 142 près de l'extrémité d'entrée 121 de guide, on s'assure de dévier l'onde lumineuse non guidée 4 au début de sa propagation dans le substrat 110.

Des essais ont montré qu'avec des électrodes supplémentaires 141, 142 espacées de 10 micromètres et polarisées avec une tension de polarisation Vₛ égale à 5 volts, on parvenait à réduire la modulation d'amplitude résiduelle d'au moins 10 dB.

En variante cependant, les électrodes supplémentaires peuvent être disposées entre l'extrémité de sortie de guide et les électrodes de modulation.

En variante encore, les moyens de polarisation électrique peuvent comprendre trois électrodes supplémentaires disposées de manière analogue aux électrodes de modulation 131, 132, 133 de la figure 4, ces trois électrodes supplémentaires étant séparées des électrodes de modulation.

Afin de limiter la tension de polarisation Vₛ appliquée sur les électrodes supplémentaires 141, 142, on peut prévoir dans un troisième mode de réalisation de l'invention tel que représenté sur la figure 6, que les moyens de polarisation électrique comprennent en outre deux autres électrodes supplémentaires 151, 152 distinctes des électrodes de modulation 131, 132 et disposées parallèlement au guide d'onde 120 entre l'extrémité de sortie 122 de guide et les électrodes de modulation 131, 132.

Ces deux autres électrodes supplémentaires 151, 152 sont susceptibles d'être polarisées par une autre tension de polarisation V'ₛ pour générer un autre champ électrique permanent dans le substrat 110 électro-optique, ici sous lesdites deux autres électrodes supplémentaires 151, 152 pour diminuer l'indice nₛ de réfraction optique dudit substrat 110 au voisinage du guide d'onde 120.

De cette façon, l'onde lumineuse non guidée 4 qui se propage dans le substrat 110 est doublement déviée et éloignée de l'extrémité de sortie 122 de guide de sorte que la modulation d'amplitude résiduelle est encore réduite.

Avec deux autres électrodes supplémentaires 151, 152 identiques aux deux électrodes supplémentaires 141, 142 précédemment décrites, et en appliquant des tensions de polarisation Vₛ et V'ₛ égales à 2,5 V chacune, on réduit encore plus la modulation d'amplitude résiduelle.

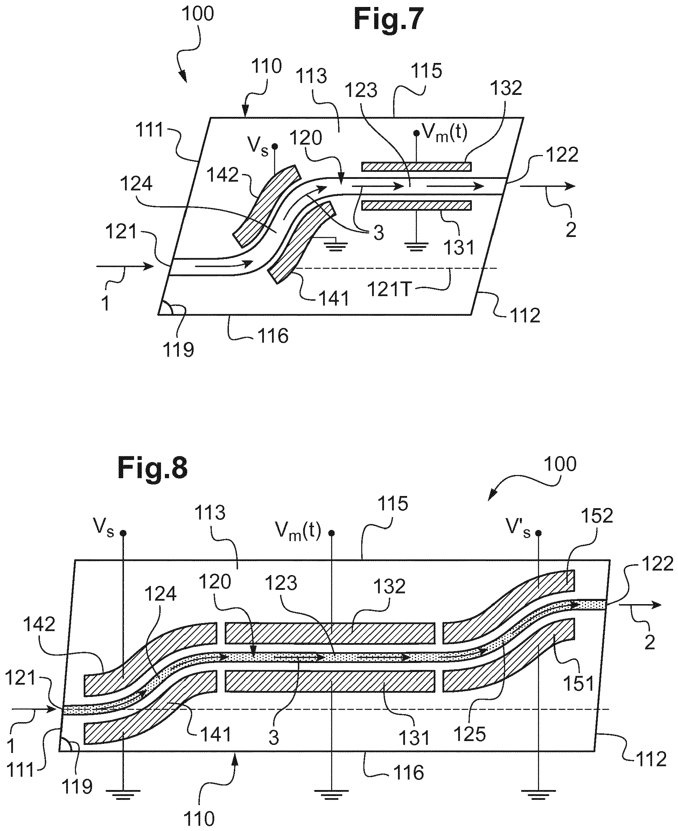

Dans des variantes des deuxième et troisième modes de réalisation, représentées respectivement sur les figures 7 et 8, le guide d'onde 120 comporte respectivement une portion courbe 124 et deux portions courbes 124, 125.

Dans ce cas, le guide d'onde 120 qui s'étend, dans un plan parallèle à la face supérieure 113, entre l'extrémité d'entrée 121 de guide située sur la face d'entrée 111 du substrat 110 et l'extrémité de sortie 122 de guide située sur la face de sortie 112 du substrat 110 est donc non rectiligne.

Dans la variante du deuxième mode de réalisation du modulateur 100 de phase électro-optique représenté sur la figure 7, le guide présente une première portion courbe 124 de guide entre l'extrémité d'entrée 121 et l'extrémité de sortie 122 de guide, si bien que l'onde lumineuse guidée 3 dans le guide d'onde 120 se propage en suivant le chemin optique de celui-ci entre l'extrémité d'entrée 121 et l'extrémité de sortie 122 de guide.

Dans ce cas, les deux électrodes supplémentaires 141, 142 du modulateur 100, présentent alors une forme également courbe de manière à être disposées parallèlement au guide d'onde 120 au niveau de la première portion courbe 124 de guide.

De manière avantageuse, la première portion courbe 124 de guide présente une forme et des dimensions sélectionnées pour décaler latéralement l'espace inter-électrodes 118 par rapport à la direction de propagation de l'onde lumineuse non guidée 4.

Plus précisément, la première portion courbe 124 de guide est telle que le prolongement d'une direction tangente 121T au guide d'onde 120 sur la face d'entrée 111 s'écarte de l'espace inter-électrodes 118.

Autrement formulé, il convient pour éviter le piégeage de l'onde lumineuse non guidée 4 dans la zone de modulation d'indice 117 que le plan de réfraction, associé à l'onde lumineuse incidente 1 en entrée du guide d'onde 120 et contenant notamment la direction tangente 121T, n'intercepte pas l'espace inter-électrodes 118.

La direction tangente 121T au guide d'onde 120 sur la face d'entrée 121 correspond classiquement à la direction principale de réfraction de l'onde lumineuse incidente 1 dans le guide d'onde 120, ou plus précisément ici à la projection de cette direction principale sur l'une des faces supérieure 113 ou inférieure 114.

En d'autres termes, cette direction tangente 121T correspond à la direction principale de propagation de l'onde lumineuse guidée 3 dans le guide d'onde 120 à l'extrémité d'entrée 121 de guide. Néanmoins, après entrée dans le guide d'onde 120, l'onde lumineuse guidée 3 suit le chemin optique du guide d'onde 120 de sorte qu'elle parvient sur la face de sortie 112 au niveau de l'extrémité de sortie 122 de guide.

De la même manière, l'onde lumineuse non guidée 4 se propage librement dans le substrat 110 de l'extrémité d'entrée 121 de guide jusque vers la face de sortie 112 du substrat 110, avec une direction principale de propagation 121P (voir figure 3) coplanaire avec la direction tangente 121T dans le plan de réfraction.

Ainsi, à la lumière de la figure 7, on comprend que grâce à la première portion courbe 124 de guide, l'onde lumineuse non guidée 4 ne traverse plus la zone de modulation d'indice 117 qui s'étend dans le substrat 110 à partir de l'espace inter-électrodes 118, de sorte que l'onde lumineuse non guidée 4 n'est plus guidée dans le substrat 110, sous les électrodes de modulation 131, 132.

L'onde lumineuse non guidée 4 se propage alors dans le substrat 110 selon la trajectoire représentée sur la figure 3 même lors de l'application d'une tension de modulation Vₘ(t) entre les électrodes 131, 132 de modulation.

Au cours de sa propagation dans le substrat 110, l'onde lumineuse non guidée 4 diverge et présente une amplitude 4A qui, par diffraction, va s'étaler au fur et à mesure de la propagation, de sorte que l'onde lumineuse non guidée se recouvre seulement partiellement avec l'onde lumineuse guidée 3 au niveau de l'extrémité de sortie 122 de guide, si bien qu'elles ne peuvent plus autant interférer entre elles et entraîner une modulation d'amplitude résiduelle sur l'onde lumineuse émergente 2 en sortie du modulateur 100.

La première portion courbe 124 de guide introduit alors un écart entre l'onde lumineuse non guidée 4 et l'espace inter-électrodes 118 qui est supérieur à l'extension spatiale 4A de l'onde lumineuse non guidée, en particulier à l'entrée de l'espace inter-électrodes 118.

La première portion courbe 124 de guide présente ici une forme de S (voir figure 5) avec deux courbures opposées présentant chacune un rayon de courbure Rc (voir figure 5) dont la valeur est supérieure à une valeur minimale R_{C,min} prédéterminée de sorte que les pertes optiques induites par cette première portion courbe 124 de guide sont inférieures à 0,5 dB.

Cette valeur minimale R_{C,min} du rayon de courbure est, de préférence, supérieure ou égale à 20 mm.

Afin de limiter les pertes introduites par des courbures, on peut prévoir dans une variante du troisième mode de réalisation (voir figure 8), que le guide d'onde 120 optique présente au moins une deuxième portion courbe 125 de guide entre l'extrémité d'entrée 121 de guide et l'extrémité de sortie 122 de guide, ici après la portion rectiligne 123 du guide.

De cette façon, pour une valeur fixée du décalage spatial entre l'onde lumineuse non guidée 4 et la zone de modulation d'indice 117, il est possible d'utiliser des portions courbes 124, 125 de guide ayant des courbures plus faibles et introduisant moins de pertes dans le modulateur 100.

Bien évidemment, il est possible d'utiliser une ou plusieurs portions courbes de guide dans le modulateur de phase électro-optique lorsque les moyens de polarisation électrique comprennent les électrodes de modulation dudit modulateur (cas du premier mode de réalisation). Ceci présente l'avantage de pouvoir utiliser une tension additionnelle de polarisation plus faible que lorsque le guide d'onde ne présente pas de portion courbe.

## Revendications

1. Modulateur (100) de phase électro-optique, destiné à moduler la phase optique d'une onde lumineuse incidente (1) sur ledit modulateur (100), comportant :
- un substrat (110) électro-optique comprenant une face d'entrée (111) et une face de sortie (112),
- un guide d'onde (120) optique continûment rectiligne depuis une extrémité d'entrée (121) de guide située sur ladite face d'entrée (111) du substrat (110) jusqu'à une extrémité de sortie (122) de guide située sur ladite face de sortie (112) du substrat (110), ledit guide d'onde (120) optique ayant un indice (n_{g}) de réfraction optique supérieur à l'indice (nₛ) de réfraction optique du substrat (110) et étant adapté pour guider ladite onde lumineuse incidente (1) partiellement couplée dans ledit guide d'onde (120) optique en une onde lumineuse guidée (3) se propageant suivant le chemin optique dudit guide d'onde (120) optique entre ladite extrémité d'entrée (121) et ladite extrémité de sortie (122) de guide,
- au moins deux électrodes de modulation (131, 132) disposées parallèlement audit guide d'onde (120), pour, lorsqu'une tension de modulation (Vₘ(t)) est appliquée entre lesdites électrodes de modulation (131, 132), introduire un déphasage de modulation, fonction de ladite tension de modulation (Vₘ(t)), sur ladite onde lumineuse guidée (3) se propageant dans ledit guide d'onde (120) optique,
- des moyens aptes à diminuer l'indice (nₛ) de réfraction optique dudit substrat (110) électro-optique au voisinage du guide d'onde (120),
**caractérisé en ce que** lesdits moyens sont des moyens de polarisation électrique (131, 132 ; 141, 142, 151, 152) dudit substrat (110) électro-optique adaptés pour générer un champ électrique permanent dans le substrat (110) électro-optique, ledit champ électrique permanent étant apte à diminuer l'indice (nₛ) de réfraction optique dudit substrat (110) électro-optique au voisinage du guide d'onde (120).

2. Modulateur (100) de phase électro-optique selon la revendication 1, dans lequel lesdits moyens de polarisation électrique comprennent lesdites au moins deux électrodes de modulation (131, 132), qui, lorsqu'une tension additionnelle de polarisation (Vₛ) est appliquée entre lesdites électrodes de modulation (131, 132) en plus de ladite tension de modulation (Vₘ(t)), sont susceptibles de générer ledit champ électrique permanent.

3. Modulateur (100) de phase électro-optique selon la revendication 1, dans lequel lesdits moyens de polarisation électrique comprennent au moins deux électrodes supplémentaires (141, 142) distinctes desdites électrodes de modulation (131, 132) et disposées parallèlement audit guide d'onde (120) entre ladite extrémité d'entrée (121) de guide ou ladite extrémité de sortie (122) de guide et lesdites électrodes de modulation (131, 132), lesdites au moins deux électrodes supplémentaires (141, 142) étant susceptibles d'être polarisées par une tension de polarisation (Vₛ) pour générer ledit champ électrique permanent.

4. Modulateur (100) de phase électro-optique selon la revendication 3, dans lequel, lesdites au moins deux électrodes supplémentaires (141, 142) étant disposées entre ladite extrémité d'entrée (121) de guide et lesdites électrodes de modulation (131, 132), lesdits moyens de polarisation électrique comprennent en outre au moins deux autres électrodes supplémentaires (151, 152) distinctes desdites électrodes de modulation (131, 132) et disposées parallèlement audit guide d'onde (120) entre ladite extrémité de sortie (122) de guide et lesdites électrodes de modulation (131, 132), lesdites au moins deux autres électrodes supplémentaires (151, 152) étant susceptibles d'être polarisées par une autre tension de polarisation (V'ₛ) pour générer un autre champ électrique permanent dans le substrat (110) électro-optique apte à diminuer l'indice (nₛ) de réfraction optique dudit substrat (110) électro-optique au voisinage du guide d'onde (120).

5. Modulateur (100) de phase électro-optique selon l'une des revendications 1 à 4, comportant en outre des moyens de couplage (10) de ladite onde lumineuse incidente (1) à l'extrémité d'entrée (121) de guide et/ou des moyens de couplage (20) de ladite onde lumineuse guidée (3) à l'extrémité de sortie (122) de guide, lesdits moyens de couplage comprenant de préférence une section de fibre optique.

6. Modulateur (100) de phase électro-optique selon l'une des revendications 1 à 5, dans lequel ledit substrat (110) électro-optique est de géométrie planaire avec deux faces latérales (115, 116), une face inférieure (114) et une face supérieure (113), lesdites faces inférieure (114) et supérieure (113) s'étendant entre ladite face d'entrée (111) et ladite face de sortie (112) du substrat (110) et ledit guide d'onde (120) optique s'étendant dans un plan parallèle et proche de ladite surface supérieure (113).

7. Modulateur (100) de phase électro-optique selon l'une des revendications 1 à 6, dans lequel ledit substrat (110) électro-optique est un substrat de niobate de lithium, de tantalate de lithium, en matériau polymère, en matériau semi-conducteur, par exemple en silicium, en phosphure d'indium, ou en arséniure de gallium.

8. Modulateur (100) de phase électro-optique selon l'une des revendications 1 à 7, dans lequel :
- la différence d'indice de réfraction optique entre ledit guide d'onde (120) et ledit substrat (110) électro-optique est comprise dans une gamme allant de 10⁻² à 10⁻³, et
- la différence d'indice de réfraction optique induite dans ledit substrat (110) électro-optique grâce aux moyens de polarisation électrique est comprise dans une gamme allant de 10⁻⁵ à 10⁻⁶.

9. Procédé de modulation pour un modulateur (100) de phase électro-optique selon l'une des revendications précédentes, ledit procédé de modulation comprenant une étape de polarisation desdits moyens de polarisation électrique (131, 132 ; 141, 142) adaptée à générer un champ électrique permanent apte à diminuer l'indice (nₛ) de réfraction optique dudit substrat (110) électro-optique au voisinage dudit guide d'onde (120).

## Patentansprüche

1. Elektrooptischer Phasenmodulator (100), der dazu bestimmt ist, die optische Phase einer auf den Modulator (100) einfallenden Lichtwelle (1) zu modulieren, mit
- einem elektrooptischen Substrat (110), das eine Eingangsseite (111) und eine Ausgangsseite (112) aufweist,
- einem optischen Wellenleiter (120), der sich von einem auf der Eingangsseite (111) des Substrats (110) liegenden Leitereingangsende (121) durchgehend geradlinig bis zu einem auf der Ausgangsseite (112) des Substrats (110) liegenden Leiterausgangsende (122) erstreckt, wobei der optische Wellenleiter (120) einen optischen Brechungsindex (n_{g}) aufweist, der größer als der optische Brechungsindex (nₛ) des Substrats (110) ist, und dazu ausgelegt ist, die einfallende, teilweise in den optischen Wellenleiter (120) eingekoppelte Lichtwelle (1) als eine geführte Lichtwelle (3) zu fuhren, die sich entlang eines optischen Weges des optischen Wellenleiters (120) zwischen dem Leitereingangsende (121) und dem -ausgangsende (122) ausbreitet,
- wenigstens zwei parallel zum Wellenleiter (120) angeordneten Modulationselektroden (131, 132), um dann, wenn eine Modulationsspannung (Vₘ(t)) zwischen den Modulationselektroden (131, 132) angelegt ist, auf die sich im optischen Wellenleiter (120) ausbreitende geführte Lichtwelle (3) eine Modulationsphasenverschiebung in Abhängigkeit von der Modulationsspannung (Vₘ(t)) anzuwenden,
- Mitteln, die dazu ausgelegt sind, den optischen Brechungsindex (nₛ) des Substrats (110) des elektrooptischen Substrats (110) in der Umgebung des Wellenleiters (120) zu senken,
**dadurch gekennzeichnet, daß** die Mittel Mittel zum elektrischen Polarisieren (131, 132; 141, 142, 151, 152) des elektrooptischen Substrats (110) sind, die dazu ausgelegt sind, im elektrooptischen Substrat (110) ein permanentes elektrisches Feld zu erzeugen, wobei das permanente elektrische Feld geeignet ist, den optischen Brechungsindex (nₛ) des elektrooptischen Substrats (110) in der Umgebung des Wellenleiters (120) zu senken.

2. Elektrooptischer Phasenmodulator (100) gemäß Anspruch 1, bei dem die elektrischen Polarisationsmittel die wenigstens zwei Modulationselektroden (131, 132) aufweisen, die dann, wenn zusätzlich zur Modulationsspannung (Vₘ(t)) eine zusätzliche Polarisationsspannung (Vₛ) zwischen den Modulationselektroden (131, 132) angelegt wird, geeignet sind, das permanente elektrische Feld zu erzeugen.

3. Elektrooptischer Phasenmodulator (100) gemäß Anspruch 1, bei dem die elektrischen Polarisationsmittel wenigstens zwei von den Modulationselektroden (131, 132) verschiedene zusätzliche, parallel zum Wellenleiter (120) zwischen dem Leitereingangsende (121) oder dem -ausgangsende (122) und den Modulationselektroden (131, 132) angeordnete Modulationselektroden (141, 142) aufweisen, wobei die wenigstens zwei zusätzlichen Elektroden (141, 142) geeignet sind, durch eine Polarisationsspannung (Vₛ) polarisiert zu werden, um das permanente elektrische Feld zu erzeugen.

4. Elektrooptischer Phasenmodulator (100) gemäß Anspruch 3, bei dem die wenigstens zwei zusätzlichen Elektroden (141, 142) zwischen dem Leitereingangsende (121) und den Modulationselektroden (131, 132) angeordnet sind und bei dem die elektrischen Polarisationsmittel außerdem wenigstens zwei von den Modulationselektroden (131, 132) verschiedene weitere zusätzliche, parallel zum Wellenleiter (120) zwischen dem Leiterausgangsende (122) und den Modulationselektroden (131, 132) angeordnete Modulationselektroden (151, 152) aufweisen, wobei die wenigstens zwei zusätzlichen Elektroden (151, 152) geeignet sind, durch eine weitere Polarisationsspannung (V'ₛ) polarisiert zu werden, um im elektrooptischen Substrat (110) ein weiteres permanentes elektrisches Feld zu erzeugen, das geeignet ist, den optischen Brechungsindex (nₛ) des elektrooptischen Substrats (110) in der Umgebung des Wellenleiters (120) zu senken.

5. Elektrooptischer Phasenmodulator (100) gemäß einem der Ansprüche 1 bis 4, der außerdem Mittel (10) zum Koppeln der einfallenden Lichtwelle (1) an das Leitereingangsende (121) und/oder Mittel (20) zum Koppeln der geführten Lichtwelle (3) an das Leiterausgangsende (122) aufweist, wobei die Kopplungsmittel vorzugsweise einen Abschnitt einer optischen Faser aufweisen.

6. Elektrooptischer Phasenmodulator (100) gemäß einem der Ansprüche 1 bis 5, bei dem das elektrooptische Substrat (110) von ebener Geometrie mit zwei seitlichen Seiten (115, 116), einer unteren Seite (114) und einer oberen Seite (113) ist, wobei sich die untere (114) und die obere (113) Seite zwischen der Eingangsseite (111) und der Ausgangsseite (112) des Substrats (110) erstrecken und sich der optische Wellenleiter (120) in einer zur oberen Oberfläche (113) parallelen und nahen Ebene erstreckt.

7. Elektrooptischer Phasenmodulator (100) gemäß einem der Ansprüche 1 bis 6, bei dem das elektrooptische Substrat (110) ein Substrat aus Lithiumniobat, aus Lithiumtantalat, aus einem polymeren Material, aus einem Halbleitermaterial, zum Beispiel aus Silizium, aus Indiumphosphid oder aus Galliumarsenid ist.

8. Elektrooptischer Phasenmodulator (100) gemäß einem der Ansprüche 1 bis 7, bei dem
- der Unterschied des optischen Brechungsindexes zwischen dem Wellenleiter (120) und dem elektrooptischen Substrat (110) in einem Bereich von 10⁻² bis 10⁻³ liegt und
- der Unterschied des durch die elektrischen Polarisationsmittel im elektrooptischen Substrat (110) induzierten Brechungsindexes in einem Bereich von 10⁻⁵ bis 10⁻⁶ liegt.

9. Modulationsverfahren für einen elektrooptischen Phasenmodulator (100) gemäß einem der vorangehenden Ansprüche, wobei das Modulationsverfahren einen Schritt des Polarisierens der elektrischen Polarisationsmittel (131, 132; 141, 142) aufweist, der dazu ausgelegt ist, ein permanentes elektrisches Feld zu erzeugen, das geeignet ist, den optischen Brechungsindex (nₛ) des elektrooptischen Substrats (110) in der Umgebung des Wellenleiters (120) zu senken.

## Claims

1. An electro-optic phase modulator (100), intended to modulate the optical phase of a lightwave (1) incident on said modulator (100), including:
- an electro-optic substrate (110) comprising an entrance face (111) and an exit face (112),
- an optical waveguide (120) continuously rectilinear from a guide entrance end (121) located on said entrance face (111) of the substrate (110) to a guide exit end (122) located on said exit face (112) of the substrate (110), said optical waveguide (120) having an optical refractive index (n_{g}) higher than the optical refractive index (nₛ) of the substrate (110) and being adapted to guide said incident lightwave (1) partially coupled in said optical waveguide (120) into a guided lightwave (3) propagating along the optical path of said optical waveguide (120) between said guide entrance end (121) and exit end (122), and
- at least two modulation electrodes (131, 132) arranged parallel to said waveguide (120), so as, when a modulation voltage (Vₘ(t)) is applied between said modulation electrodes (131, 132), to introduce a modulation phase-shift, function of said modulation voltage (Vₘ(t)), on said guided lightwave (3) propagating in said optical waveguide (120),
- means able to reduce the optical refractive index (nₛ) of said electro-optic substrate (110) in the vicinity of the waveguide (120),
**characterized in that** said means comprises electric polarization means (131, 132; 141, 142, 151, 152) for the electric polarization of said electro-optic substrate (110) adapted to generate a permanent electric field in the electro-optic substrate (110), said means being able to reduce the optical refractive index (nₛ) of said electro-optic substrate (110) in the vicinity of the waveguide (120).

2. The electro-optic phase modulator (100) according to claim 1, wherein said electric polarization means comprise said at least two modulation electrodes (131, 132) which, when an additional polarization voltage (Vₛ) is applied between said modulation electrodes (131, 132) in addition to said modulation voltage (Vₘ(t)), are liable to generate said permanent electric field.

3. The electro-optic phase modulator (100) according to claim 1, wherein said electric polarization means comprise at least two additional electrodes (141, 142) distinct from said modulation electrodes (131, 132) and arranged parallel to said waveguide (120) between said guide entrance end (121) or said guide exit end (122) and said modulation electrodes (131, 132), said at least two additional electrodes (141, 142) being liable to be polarized by a polarization voltage (Vₛ) to generate said permanent electric field.

4. The electro-optic phase modulator (100) according to claim 3, wherein said at least two additional electrodes (141, 142) being arranged between said guide entrance end (121) and said modulation electrodes (131, 132), said electric polarization means further comprise at least two other additional electrodes (151, 152) distinct from said modulation electrodes (131, 132) and arranged parallel to said waveguide (120) between said guide exit end (122) and said modulation electrodes (131, 132), said at least two other additional electrodes (151, 152) being liable to be polarized by another polarization voltage (V'ₛ) to generate another permanent electric field in the electro-optic substrate (110) adapted to reduce the optical refractive index (nₛ) of said electro-optic substrate (110) in the vicinity of the waveguide (120).

5. The electro-optic phase modulator (100) according to any one of claims 1 to 4, further including means (10) for coupling said incident lightwave (1) to the guide entrance end (121) and/or means (20) for coupling said guided lightwave (3) to the guide exit end (122), said coupling means preferably comprising a section of optical fibre.

6. The electro-optic phase modulator (100) according to any one of claims 1 to 5, wherein said electro-optic substrate (110) is of planar geometry, with two lateral faces (115, 116), a lower face (114) and an upper face (113), said lower (114) and upper (113) faces extending between said entrance face (111) and said exit face (112) of the substrate (110) and said optical waveguide (120) extending in a plane parallel and close to said upper surface (113).

7. The electro-optic phase modulator (100) according to any one of claims 1 to 6, wherein said electro-optic substrate (110) is a substrate made of lithium niobate, lithium tantalum, polymer material, semi-conductor material, for example silicon, indium phosphide, or gallium arsenide.

8. The electro-optic phase modulator (100) according to any one of claims 1 to 7, wherein:
- the difference of optical refractive index between said waveguide (120) and said electro-optic substrate (110) is comprised in a range from 10⁻² to 10⁻³, and
- the difference of optical refractive index induced in said electro-optic substrate (110) thanks to the electric polarization means is comprised in a range from 10⁻⁵ to 10⁻⁶.

9. A method of modulation for an electro-optic phase modulator (100) according to any one of the preceding claims, said method of modulation comprising a step of polarizing said electric polarization means (131, 132; 141, 142) adapted to generate a permanent electric field able to reduce the optical refractive index (nₛ) of said electro-optic substrate (110) in the vicinity of said waveguide (120).
